# FASCICULE DE BREVET EUROPEEN

(11) **EP 2 602 921 B1**
(45) Date de publication et mention de la délivrance du brevet: **22.09.2021**
(21) Numéro de dépôt: 12194752.7
(22) Date de dépôt: 29.11.2012
(51) Int. Cl.: H02M 1/15, H03F 9/02

(54) **CONVERTISSEUR DE PUISSANCE DOTÉ D'UNE INDUCTANCE VARIABLE**
LEISTUNGUMWANDLER VERSEHEN MIT VARIABELER INDUKTANZ
POWER CONVERTER WITH VARIABLE INDUCTANCE

(30) Priorité: 09.12.2011 FR 1161367
(43) Date de publication de la demande: 12.06.2013
(73) Titulaire: Schneider Toshiba Inverter Europe SAS, 27120 Pacy sur Eure (FR)
(72) Inventeur: Allaert, Yves-Laurent, 27200 VERNON (FR)
(74) Mandataire: Mouney, Jérôme

(56) Documents cités:
- WO-A1-2009/125047
- WO-A1-2011/127982
- GB-A- 2 195 850
- None

## Description

### Domaine technique de l'invention

La présente invention se rapporte à un convertisseur de puissance doté d'une inductance variable.

### Etat de la technique

De manière connue, un convertisseur de puissance comporte un bus continu d'alimentation alimenté par une source de tension continue, un condensateur de bus destiné à maintenir la tension continue du bus à une valeur constante et un module onduleur destiné à convertir la tension continue fournie par le bus en une tension variable à destination d'une charge électrique. Dans un convertisseur de puissance de type variateur de vitesse, la source de tension continue comporte un module redresseur connecté à un réseau de distribution électrique et destiné à redresser la tension alternative fournie par le réseau et à appliquer une tension continue sur le bus continu d'alimentation.

Il est également connu de connecter une inductance sur le bus continu d'alimentation de manière à agir sur le THDi ("Total Harmonic Distortion of Current") et le PWHD ("Partial Weighted Harmonic Distortion").

Le THDi correspond au taux de distorsion harmonique en courant et représente donc la valeur efficace des harmoniques rapportée à la valeur efficace du courant fondamental. Le PWHD introduit pour sa part une pondération donnant davantage de poids aux harmoniques à haute fréquence, plus particulièrement ceux des rangs 14 à 40.

Cependant, cette solution à inductance simple n'est pas satisfaisante lorsque la charge électrique absorbe une puissance supérieure à celle pour laquelle le convertisseur est dimensionné, entraînant des oscillations de tension sur le bus continu d'alimentation et donc une dégradation du THDi ou du PWHD.

Le document WO2011/127982 décrit une inductance de mode commun dans laquelle le flux continu dans le matériau magnétique est annulé afin d'éviter la saturation dudit matériau magnétique, en injectant un courant continu dans l'inductance. Ce document ne décrit pas une solution permettant de gérer les oscillations de tension sur le bus.

Le brevet GB2195850 décrit pour sa part un amplificateur magnétique.

Le but de l'invention est donc de proposer un convertisseur de puissance dans lequel le THDi et le PWHD sont maintenus à des valeurs acceptables même si la charge électrique absorbe une puissance supérieure à celle acceptée par le convertisseur.

### Exposé de l'invention

Ce but est atteint par un convertisseur de puissance destiné à être connecté à une charge électrique et comportant :
- un bus continu d'alimentation doté d'une première ligne d'alimentation et d'une deuxième ligne d'alimentation,
- un condensateur de bus connecté à la première ligne d'alimentation et à la deuxième ligne d'alimentation et destiné à maintenir constante une tension continue sur le bus continu d'alimentation,
- un module onduleur connecté au bus continu d'alimentation, en aval du condensateur de bus, et destiné à convertir la tension continue en une tension variable à appliquer à la charge électrique,
- une inductance variable comportant un noyau en matériau ferromagnétique, une première bobine enroulée sur une première partie du noyau en matériau ferromagnétique et connectée en série sur la première ligne d'alimentation du bus continu d'alimentation, en amont du condensateur de bus, et une deuxième bobine enroulée sur une deuxième partie du noyau en matériau ferromagnétique,
- une source d'alimentation en courant continu connectée à la deuxième bobine,
- des moyens de détection des oscillations de la tension continue sur le bus continu d'alimentation,
- des moyens de commande de la source d'alimentation, agencés pour contrôler le courant continu fourni à la deuxième bobine en vue de faire varier la valeur d'inductance de l'inductance variable, les moyens de commande étant agencés pour saturer l'inductance variable afin de baisser la valeur de ladite inductance lorsque des oscillations apparaissent sur le bus continu d'alimentation.

Selon une particularité, la source d'alimentation comporte un convertisseur continu/continu connecté à la première ligne d'alimentation et à la deuxième ligne d'alimentation.

Selon une première variante de réalisation, le convertisseur continu/continu est connecté au bus continu d'alimentation, en amont de l'inductance variable.

Selon une deuxième variante de réalisation, le convertisseur continu/continu est connecté au bus continu d'alimentation, en aval de l'inductance variable.

Selon une particularité de l'invention, le noyau ferromagnétique comporte deux fenêtres séparées entre elles par une branche centrale et circonscrites par une partie externe qui comporte au moins une première branche et une deuxième branche situées de part et d'autre de la branche centrale.

Selon une première configuration de l'invention, la première bobine est enroulée autour de la branche centrale et la deuxième bobine est enroulée autour de la première branche puis de la deuxième branche.

Selon une deuxième configuration de l'invention, la première bobine est enroulée autour de la première branche puis de la deuxième branche et la deuxième bobine est enroulée autour de la branche centrale.

Selon une troisième configuration de l'invention, la première bobine est enroulée autour de la première branche, la deuxième bobine est enroulée autour de la branche centrale et l'inductance variable comporte une troisième bobine enroulée autour de la deuxième branche et connectée en série sur la deuxième ligne d'alimentation du bus continu d'alimentation.

Le but de l'invention est également atteint par un convertisseur de puissance destiné à être connecté à une charge électrique et comportant :
- un bus continu d'alimentation doté d'une première ligne d'alimentation et d'une deuxième ligne d'alimentation,
- un condensateur de bus connecté à la première ligne d'alimentation et à la deuxième ligne d'alimentation et destiné à maintenir constante une tension continue sur le bus continu d'alimentation,
- un module onduleur connecté au bus continu d'alimentation, en aval du condensateur de bus, et destiné à convertir la tension continue en une tension variable à appliquer à la charge électrique,
- une inductance variable comportant :
   - un premier noyau en matériau ferromagnétique et une première bobine enroulée sur une première partie du premier noyau en matériau ferromagnétique et connectée en série sur la première ligne d'alimentation du bus continu d'alimentation, en amont du condensateur de bus,
   - un deuxième noyau en matériau ferromagnétique et une deuxième bobine enroulée sur une première partie du deuxième noyau en matériau ferromagnétique et connectée en série sur la deuxième ligne d'alimentation du bus continu d'alimentation, en amont du condensateur de bus,
   - une troisième bobine comportant un premier enroulement réalisé sur une deuxième partie du premier noyau en matériau ferromagnétique et un deuxième enroulement connecté en série avec le premier enroulement et réalisé sur une deuxième partie du deuxième noyau en matériau ferromagnétique,
- une source d'alimentation en courant continu connectée à la troisième bobine,
- des moyens de détection des oscillations de la tension continue (Vbus) sur le bus continu d'alimentation,
- des moyens de commande de la source d'alimentation, agencés pour contrôler le courant continu fourni à la troisième bobine en vue de faire varier la valeur d'inductance de l'inductance variable, les moyens de commande étant agencés pour saturer l'inductance variable (Lv) afin de baisser la valeur de ladite inductance lorsque des oscillations apparaissent sur le bus continu d'alimentation.

Selon une particularité, la source d'alimentation comporte un convertisseur continu/continu connecté à la première ligne d'alimentation et à la deuxième ligne d'alimentation.

Selon une première variante de réalisation, le convertisseur continu/continu est connecté au bus continu d'alimentation, en amont de l'inductance variable.

Selon une deuxième variante de réalisation, le convertisseur continu/continu est connecté au bus continu d'alimentation, en aval de l'inductance variable.

Selon une autre particularité, le premier noyau en matériau ferromagnétique et le deuxième noyau en matériau ferromagnétique comportent chacun deux fenêtres séparées entre elles par une branche centrale et circonscrites par une partie externe qui comporte au moins une première branche et une deuxième branche situées de part et d'autre de la branche centrale.

Selon une configuration de ce convertisseur, la première bobine est enroulée autour de la branche centrale du premier noyau en matériau ferromagnétique, la deuxième bobine est enroulée autour de la branche centrale du deuxième noyau en matériau ferromagnétique, le premier enroulement de la troisième bobine est réalisé autour de la deuxième branche puis de la première branche du premier noyau en matériau ferromagnétique et le deuxième enroulement de la troisième bobine est réalisé autour de la deuxième branche du deuxième noyau en matériau ferromagnétique puis de la première branche du deuxième noyau en matériau ferromagnétique.

Selon une autre configuration de ce convertisseur, la première bobine comporte un premier enroulement réalisé autour de la première branche puis de la deuxième branche du premier noyau en matériau ferromagnétique, la deuxième bobine comporte un premier enroulement réalisé autour de la première branche puis de la deuxième branche du deuxième noyau en matériau ferromagnétique et la troisième bobine comporte un premier enroulement réalisé autour de la branche centrale du premier noyau en matériau ferromagnétique et un deuxième enroulement connecté en série avec le premier enroulement et réalisé autour de la branche centrale du deuxième noyau en matériau ferromagnétique.

Selon l'invention, quand la tension du bus se met à osciller ou quand la puissance absorbée par la charge électrique se rapproche de la puissance maximale exploitable avec la valeur de l'inductance courante, la valeur de l'inductance est par exemple réduite en contrôlant la source d'alimentation.

### Brève description des figures

D'autres caractéristiques et avantages vont apparaître dans la description détaillée qui suit faite en regard des dessins annexés dans lesquels :
- la figure 1 représente le convertisseur de puissance de l'invention selon un premier mode de réalisation,
- la figure 2 représente le convertisseur de puissance de l'invention selon un deuxième mode de réalisation,
- la figure 3 représente le convertisseur de puissance de l'invention selon un troisième mode de réalisation,
- la figure 4 représente le convertisseur de puissance de l'invention selon un quatrième mode de réalisation,
- la figure 5 représente le convertisseur de puissance de l'invention selon un cinquième mode de réalisation,
- la figure 6 représente une inductance variable conforme à celle employée dans le convertisseur de l'invention.

### Description détaillée d'au moins un mode de réalisation

L'invention concerne un convertisseur de puissance destiné à être connecté à une charge électrique C. De manière connue, un convertisseur de puissance comporte un bus continu d'alimentation alimenté par une source de tension continue. Le bus continu d'alimentation comporte une première ligne d'alimentation 10 et une deuxième ligne d'alimentation 11. L'une de ces deux lignes d'alimentation est à un potentiel électrique positif et l'autre de ces deux lignes d'alimentation est à un potentiel électrique négatif.

Le convertisseur de puissance comporte un condensateur de bus Cbus destiné à maintenir la tension du bus Vbus à une valeur constante et connecté à la première ligne d'alimentation 10 et à la deuxième ligne d'alimentation 11.

Le convertisseur de puissance comporte un module onduleur 12 connecté en aval du bus continu d'alimentation et destiné à convertir la tension continue Vbus présente sur le bus en une tension variable à destination de la charge électrique. Le module onduleur 12 comporte plusieurs bras de commutation comprenant chacun au moins deux transistors de puissance.

Un convertisseur de puissance de type variateur de vitesse comporte également, en amont du condensateur de bus Cbus, un module redresseur 13 connecté à un réseau de distribution électrique R et destiné à redresser une tension alternative fournie par le réseau de distribution électrique R et à appliquer la tension continue sur le bus continu d'alimentation.

Selon l'invention, le convertisseur de puissance comporte une inductance variable Lv connectée en série sur le bus continu d'alimentation et commandée pour adapter la valeur d'inductance à la charge électrique C commandée par le convertisseur de puissance et réduire la valeur d'inductance si des oscillations apparaissent sur la tension continue Vbus du bus. Pour cela, il s'agit de saturer l'inductance variable Lv lors d'une instabilité apparaissant sur le bus, afin de faire baisser la valeur de l'inductance. L'inductance variable Lv est connectée sur le bus continu d'alimentation, en amont du condensateur de bus Cbus.

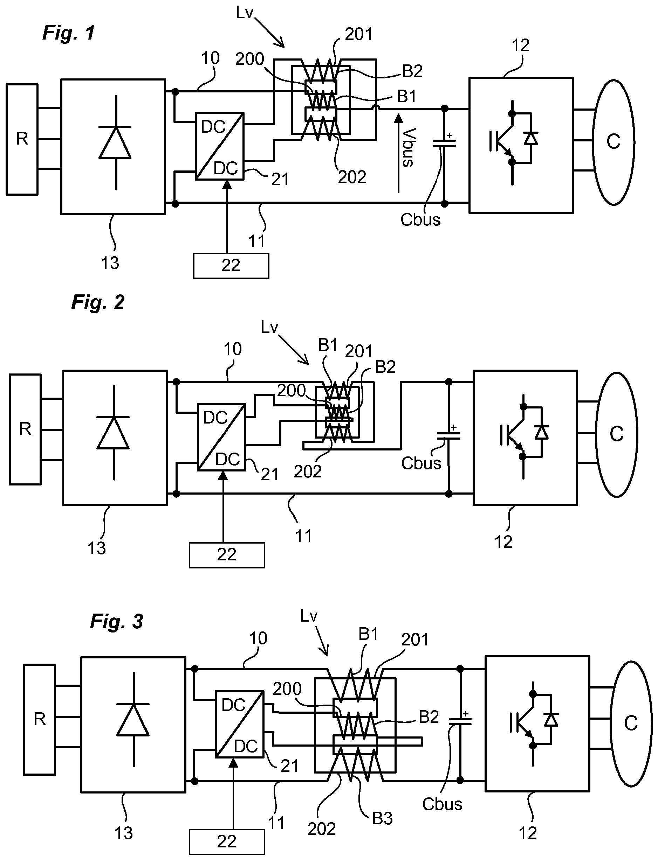

Comme représentée sur les figures 1 à 3 annexées, l'inductance variable Lv peut être connectée sur le bus continu d'alimentation selon différentes configurations.

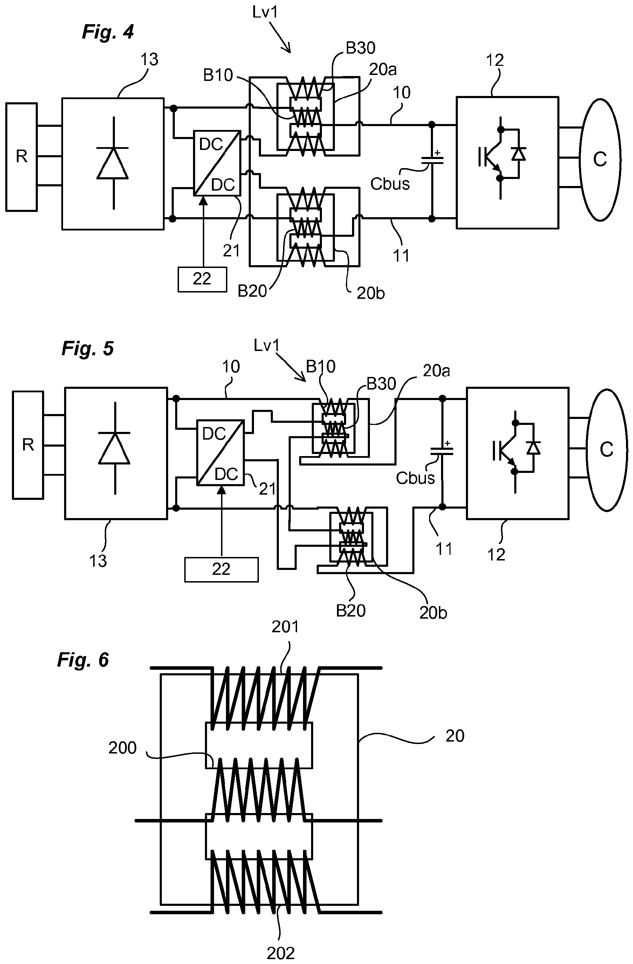

En référence à la figure 6, une inductance variable Lv comporte un noyau 20 en matériau ferromagnétique et au moins deux bobines B1, B2 enroulées sur au moins deux parties de ce noyau 20 en matériau ferromagnétique.

Le noyau 20 en matériau ferromagnétique se présente sous la forme de deux boucles de circuit magnétique, accolées entre elles de manière à former une branche centrale 200 commune. De part et d'autre de cette branche centrale commune, le noyau 20 en matériau ferromagnétique comporte ainsi deux branches 201, 202 latérales externes, dites première branche 201 et deuxième branche 202. Chaque boucle de circuit magnétique est par exemple circulaire.

Le convertisseur de puissance comporte une source d'alimentation en courant continu destinée à alimenter l'inductance variable Lv en vue de faire varier sa valeur d'inductance. Cette source d'alimentation est par exemple créée à partir de la tension Vbus disponible sur le bus continu d'alimentation et comporte par exemple un convertisseur continu/continu (ci-après désigné convertisseur DC/DC 21) connecté d'une part à la première ligne d'alimentation 10 du bus continu d'alimentation et d'autre part à la deuxième ligne d'alimentation 11 du bus continu d'alimentation. Ce convertisseur DC/DC 21 peut être connecté aux deux lignes d'alimentation du bus, en amont de l'inductance variable Lv ou en aval de l'inductance variable Lv. Par rapport à la configuration aval, la configuration amont permet de réduire les pertes dans l'inductance variable Lv. Mais, dans cette configuration amont, la tension continue disponible à cet endroit du bus présente plus d'oscillations que celle disponible après le filtre LC formé par l'inductance variable et le condensateur de bus.

Dans la suite de la description, nous prenons l'exemple du convertisseur DC/DC 21 connecté selon la configuration amont décrite ci-dessus mais il faut comprendre qu'il peut tout à fait être connecté selon la configuration aval.

Dans la suite de la description, nous considérons que la deuxième bobine B2 de l'inductance variable est connectée à la source d'alimentation en courant continu et que la première bobine B1 de l'inductance variable Lv est connectée en série sur la première ligne d'alimentation 10 du bus continu d'alimentation.

Selon l'invention, le convertisseur de puissance comporte des moyens de commande 22 de la source d'alimentation en courant continu, qui permettent de contrôler le courant continu injecté dans la deuxième bobine B2 pour faire varier la valeur d'inductance de l'inductance variable Lv. Des moyens de détection permettent de détecter les oscillations de la tension Vbus sur le bus continu d'alimentation. Ces oscillations peuvent être détectées par une mesure de tension ou par estimation de la puissance fournie par le convertisseur de puissance. Les moyens de commande agissent en tenant compte par exemple du résultat de la détection réalisée par les moyens de détection.

Dans une première configuration représentée sur la figure 1, la première bobine B1 est enroulée autour de la branche centrale 200 du noyau 20 en matériau ferromagnétique et la deuxième bobine B2 comporte un premier enroulement réalisé autour de la première branche 201 du noyau en matériau ferromagnétique et un deuxième enroulement connecté en série avec le premier enroulement et réalisé autour de la deuxième branche 202 du noyau en matériau ferromagnétique.

Dans une deuxième configuration représentée sur la figure 2, la première bobine B1 comporte un premier enroulement réalisé autour de la première branche 201 du noyau en matériau ferromagnétique et un deuxième enroulement connecté en série avec le premier enroulement et réalisé autour de la deuxième branche 202 du noyau 20 en matériau ferromagnétique.

Dans une troisième configuration représentée sur la figure 3, la première bobine B1 est enroulée autour de la première branche 201 du noyau 20 en matériau ferromagnétique, la deuxième bobine B2 est enroulée autour de la branche centrale 200 du noyau 20 en matériau ferromagnétique et l'inductance variable Lv comporte une troisième bobine B3 enroulée autour de la deuxième branche 202 du noyau en matériau ferromagnétique et connectée en série sur la deuxième ligne d'alimentation 11 du bus continu d'alimentation. Cette troisième configuration présente notamment quelques avantages en termes de CEM (compatibilité électromagnétique).

Dans la quatrième configuration et la cinquième configuration représentées respectivement sur les figures 4 et 5, l'inductance variable (désignée Lv1) comporte un premier noyau 20a en matériau ferromagnétique et un deuxième noyau 20b en matériau ferromagnétique. Le premier et le deuxième noyaux 20a, 20b en matériau ferromagnétique sont préférentiellement identiques et ont une forme semblable à celle du noyau 20 en matériau ferromagnétique décrit ci-dessus. Les signes de référence employés ci-dessous et sur les figures pour ces deux noyaux 20a, 20b en matériau ferromagnétique sont identiques à ceux employés pour le noyau 20 en matériau ferromagnétique décrit ci-dessus.

Dans la quatrième configuration de la figure 4, l'inductance variable Lv1 comporte une première bobine B10 enroulée autour de la branche centrale 200 du premier noyau 20a en matériau ferromagnétique et connectée en série sur la première ligne d'alimentation du bus continu d'alimentation, une deuxième bobine B20 enroulée autour de la branche centrale 200 du deuxième noyau 20b en matériau ferromagnétique et connectée en série sur la deuxième ligne d'alimentation 11 du bus continu d'alimentation et une troisième bobine B30 connectée à la source d'alimentation en courant continu et qui comporte un premier enroulement réalisé autour de la première branche 201 puis de la deuxième branche 202 du premier noyau 20a en matériau ferromagnétique et un deuxième enroulement connecté en série avec le premier enroulement et réalisé autour de la première branche 201 puis de la deuxième branche 202 du deuxième noyau 20b en matériau ferromagnétique.

Dans la cinquième configuration représentée sur la figure 5, la première bobine B10 comporte un premier enroulement réalisé autour de la première branche 201 puis de la deuxième branche 202 du premier noyau 20a en matériau ferromagnétique et est connectée en série sur la première ligne d'alimentation 10 du bus continu d'alimentation, la deuxième bobine B20 comporte un premier enroulement réalisé autour de la première branche 201 puis de la deuxième branche 202 du deuxième noyau 20a en matériau ferromagnétique et est connectée en série sur la deuxième ligne d'alimentation 11 du bus continu d'alimentation et la troisième bobine B30 est connectée à la source d'alimentation en courant continu et comporte un premier enroulement réalisé autour de la branche centrale 200 du premier noyau 20a en matériau ferromagnétique et un deuxième enroulement connecté en série avec le premier enroulement et réalisé autour de la branche centrale 200 du deuxième noyau 20b en matériau ferromagnétique.

Ces deux dernières configurations présentent des avantages en termes de CEM (compatibilité électromagnétique).

## Revendications

1. Convertisseur de puissance destiné à être connecté à une charge électrique (C) et comportant :
- un bus continu d'alimentation doté d'une première ligne d'alimentation (10) et d'une deuxième ligne d'alimentation (11),
- un condensateur de bus (Cbus) connecté à la première ligne d'alimentation (10) et à la deuxième ligne d'alimentation (11) et destiné à maintenir constante une tension continue (Vbus) sur le bus continu d'alimentation,
- un module onduleur (12) connecté au bus continu d'alimentation, en aval du condensateur de bus (Cbus), et destiné à convertir la tension continue en une tension variable à appliquer à la charge électrique (C),
**caractérisé en ce qu'**il comporte :
- une inductance variable (Lv) comportant un noyau (20) en matériau ferromagnétique et une première bobine (B1) enroulée sur une première partie du noyau (20) en matériau ferromagnétique et connectée en série sur la première ligne d'alimentation (10) du bus continu d'alimentation, en amont du condensateur de bus (Cbus), et une deuxième bobine (B2) enroulée sur une deuxième partie du noyau (20) en matériau ferromagnétique,
- une source d'alimentation (21) en courant continu connectée à la deuxième bobine,
- des moyens de détection des oscillations de la tension continue (Vbus) sur le bus continu d'alimentation,
- une source d'alimentation (21) commandée par des moyens de commande (22), la source d'alimentation commandée par des moyens de commande (22) agencés pour contrôler le courant continu fourni à la deuxième bobine (B2) en vue de faire varier la valeur d'inductance de l'inductance variable (Lv), les moyens de commande étant agencés pour saturer l'inductance variable (Lv) afin de baisser la valeur de ladite inductance lorsque des oscillations apparaissent sur le bus continu d'alimentation.

2. Convertisseur de puissance selon la revendication 1, **caractérisé en ce que** la source d'alimentation comporte un convertisseur continu/continu (21) connecté à la première ligne d'alimentation (10) et à la deuxième ligne d'alimentation (11).

3. Convertisseur de puissance selon la revendication 2, **caractérisé en ce que** le convertisseur continu/continu (21) est connecté au bus continu d'alimentation, en amont de l'inductance variable (Lv).

4. Convertisseur de puissance selon la revendication 2, **caractérisé en ce que** le convertisseur continu/continu (21) est connecté au bus continu d'alimentation, en aval de l'inductance variable (Lv).

5. Convertisseur de puissance selon l'une des revendications 1 à 4, **caractérisé en ce que** le noyau ferromagnétique (20) comporte deux fenêtres séparées entre elles par une branche centrale (200) et circonscrites par une partie externe qui comporte au moins une première branche (201) et une deuxième branche (202) situées de part et d'autre de la branche centrale.

6. Convertisseur de puissance selon la revendication 5, **caractérisé en ce que** la première bobine (B1) est enroulée autour de la branche centrale (200) et **en ce que** la deuxième bobine (B2) est enroulée autour de la première branche (201) puis de la deuxième branche (202).

7. Convertisseur de puissance selon la revendication 5, **caractérisé en ce que** la première bobine (B1) est enroulée autour de la première branche (201) puis de la deuxième branche (202) et **en ce que** la deuxième bobine (B2) est enroulée autour de la branche centrale (200).

8. Convertisseur de puissance selon la revendication 5, **caractérisé en ce que** la première bobine (B1) est enroulée autour de la première branche (201), la deuxième bobine (B2) est enroulée autour de la branche centrale (200) et **en ce que** l'inductance variable (Lv) comporte une troisième bobine (B3) enroulée autour de la deuxième branche (202) et connectée en série sur la deuxième ligne d'alimentation (11) du bus continu d'alimentation.

## Patentansprüche

1. Leistungswandler, der dazu bestimmt ist, mit einer elektrischen Last (C) verbunden zu sein, und Folgendes umfasst:
- einen Gleichstromversorgungsbus, der mit einer ersten Versorgungsleitung (10) und einer zweiten Versorgungsleitung (11) versehen ist,
- einen Buskondensator (Cbus), der mit der ersten Versorgungsleitung (10) und mit der zweiten Versorgungsleitung (11) verbunden ist und dazu bestimmt ist, eine Gleichspannung (Vbus) auf dem Gleichstromversorgungsbus konstant zu halten,
- ein Wechselrichtermodul (12), das stromabwärts des Buskondensators (Cbus) mit dem Gleichstromversorgungsbus verbunden ist und dazu bestimmt ist, die Gleichspannung in eine variable Spannung umzuwandeln, die an die elektrische Last (C) angelegt werden soll,
**dadurch gekennzeichnet, dass** er Folgendes umfasst:
- eine variable Induktivität (Lv), die Folgendes umfasst: einen Kern (20) aus ferromagnetischem Material und eine erste Spule (B1), die auf einen ersten Abschnitt des Kerns (20) aus ferromagnetischem Material gewickelt ist und in der ersten Versorgungsleitung (10) des Gleichstromversorgungsbusses stromaufwärts des Buskondensators (Cbus) in Reihe geschaltet ist, und eine zweite Spule (B2), die auf einen zweiten Abschnitt des Kerns (20) aus ferromagnetischem Material gewickelt ist,
- eine Gleichstrom-Versorgungsquelle (21), die mit der zweiten Spule verbunden ist,
- Mittel zur Erfassung der Schwingungen der Gleichspannung (Vbus) auf dem Gleichstromversorgungsbus,
- eine Versorgungsquelle (21), die durch Steuermittel (22) gesteuert wird, wobei die Versorgungsquelle durch Steuermittel (22) gesteuert wird, die dazu angeordnet sind, den der zweiten Spule (B2) bereitgestellten Gleichstrom zu überwachen, um den Induktivitätswert der variablen Induktivität (Lv) variieren zu lassen, wobei die Steuermittel dazu angeordnet sind, die variable Induktivität (Lv) zu sättigen, um den Wert der Induktivität zu senken, wenn Schwingungen auf dem Gleichstromversorgungsbus auftreten.

2. Leistungswandler nach Anspruch 1, **dadurch gekennzeichnet, dass** die Versorgungsquelle einen Gleichstrom-Gleichstrom-Wandler (21) umfasst, der mit der ersten Versorgungsleitung (10) und mit der zweiten Versorgungsleitung (11) verbunden ist.

3. Leistungswandler nach Anspruch 2, **dadurch gekennzeichnet, dass** der Gleichstrom-Gleichstrom-Wandler (21) stromaufwärts der variablen Induktivität (Lv) mit dem Gleichstromversorgungsbus verbunden ist.

4. Leistungswandler nach Anspruch 2, **dadurch gekennzeichnet, dass** der Gleichstrom-Gleichstrom-Wandler (21) stromabwärts der variablen Induktivität (Lv) mit dem Gleichstromversorgungsbus verbunden ist.

5. Leistungswandler nach einem der Ansprüche 1 bis 4, **dadurch gekennzeichnet, dass** der ferromagnetische Kern (20) zwei Fenster umfasst, die durch einen mittigen Arm (200) voneinander getrennt sind und von einem äußeren Abschnitt umgeben sind, der mindestens einen ersten Arm (201) und einen zweiten Arm (202), die sich auf beiden Seiten des mittigen Arms befinden, umfasst.

6. Leistungswandler nach Anspruch 5, **dadurch gekennzeichnet, dass** die erste Spule (B1) um den mittigen Arm (200) gewickelt ist und dass die zweite Spule (B2) um den ersten Arm (201) und dann den zweiten Arm (202) gewickelt ist.

7. Leistungswandler nach Anspruch 5, **dadurch gekennzeichnet, dass** die erste Spule (B1) um den ersten Arm (201) und dann den zweiten Arm (202) gewickelt ist und dass die zweite Spule (B2) um den mittigen Arm (200) gewickelt ist.

8. Leistungswandler nach Anspruch 5, **dadurch gekennzeichnet, dass** die erste Spule (B1) um den ersten Arm (201) gewickelt ist, die zweite Spule (B2) um den mittigen Arm (200) gewickelt ist und dass die variable Induktivität (Lv) eine dritte Spule (B3) umfasst, die um den zweiten Arm (202) gewickelt ist und in der zweiten Versorgungsleitung (11) des Gleichstromversorgungsbusses in Reihe geschaltet ist.

## Claims

1. Power converter intended to be connected to an electrical load (C) and comprising:
- a DC supply bus equipped with a first supply line (10) and a second supply line (11),
- a bus capacitor (Cbus) connected to the first supply line (10) and to the second supply line (11) and intended to keep constant a DC voltage (Vbus) on the DC supply bus,
- an inverter module (12) connected to the DC supply bus, downstream of the bus capacitor (Cbus), and intended to convert the DC voltage into a variable voltage to be applied to the electrical load (C),
**characterized in that** it comprises:
- a variable inductor (Lv) comprising a core (20) made of ferromagnetic material and a first coil (B1) wound on a first portion of the core (20) made of ferromagnetic material and connected in series to the first supply line (10) of the DC supply bus, upstream of the bus capacitor (Cbus), and a second coil (B2) wound on a second portion of the core (20) made of ferromagnetic material,
- a power source (21) for supplying DC current, which source is connected to the second coil,
- means for detecting oscillations in the DC voltage (Vbus) on the DC supply bus,
- a power source (21) that is controlled by control means (22), the power source being controlled by control means (22) arranged to control the DC current delivered to the second coil (B2) with a view to making vary the inductance value of the variable inductor (Lv), the control means being arranged to saturate the variable inductor (Lv) in order to lower the value of said inductance when oscillations appear on the DC supply bus.

2. Power converter according to Claim 1, **characterized in that** the power source comprises a DC/DC converter (21) connected to the first supply line (10) and the second supply line (11).

3. Power converter according to Claim 2, **characterized in that** the DC/DC converter (21) is connected to the DC supply bus, upstream of the variable inductor (Lv).

4. Power converter according to Claim 2, **characterized in that** the DC/DC converter (21) is connected to the DC supply bus, downstream of the variable inductor (Lv).

5. Power converter according to one of Claims 1 to 4, **characterized in that** the ferromagnetic core (20) comprises two windows that are separated from each other by a central branch (200) and that are circumscribed by an external portion that comprises at least a first branch (201) and a second branch (202) that are located on either side of the central branch.

6. Power converter according to Claim 5, **characterized in that** the first coil (B1) is wound around the central branch (200) and **in that** the second coil (B2) is wound around the first branch (201) then around the second branch (202).

7. Power converter according to Claim 5, **characterized in that** the first coil (B1) is wound around the first branch (201) then around the second branch (202) and **in that** the second coil (B2) is wound around the central branch (200).

8. Power converter according to Claim 5, **characterized in that** the first coil (B1) is wound around the first branch (201), the second coil (B2) is wound around the central branch (200) and **in that** the variable inductor (Lv) comprises a third coil (B3) wound around the second branch (202) and connected in series with the second supply line (11) of the DC supply bus.
